# FASCICULE DE BREVET EUROPEEN

(11) **EP 2 667 999 B1**
(45) Date de publication et mention de la délivrance du brevet: **14.09.2022**
(21) Numéro de dépôt: 12705368.4
(22) Date de dépôt: 24.01.2012
(51) Int. Cl.: B23K 26/073, B23K 26/38, F23R 3/06

(54) **PROCÉDÉ DE PERFORATION D'UNE PAROI D'UNE CHAMBRE DE COMBUSTION**
VERFAHREN ZUM PERFORIEREN EINER WANDUNG EINER BRENNKAMMER
METHOD OF PERFORATING A WALL OF A COMBUSTION CHAMBER

(30) Priorité: 24.01.2011 FR 1150547
(43) Date de publication de la demande: 04.12.2013
(73) Titulaire: Safran Aircraft Engines, 75015 Paris (FR)
(72) Inventeur: BUNEL, Jacques, Marcel, Arthur, 77550 Moissy-Cramayel Cedex (FR); DE SOUSA, Mario, César, 77550 Moissy-Cramayel Cedex (FR); DOMINGUEZ, Fabrice, 77550 Moissy-Cramayel Cedex (FR); RABIA, Bouzid, 77550 Moissy-Cramayel Cedex (FR)
(74) Mandataire: Camus, Olivier Jean-Claude
(86) Numéro de dépôt international: PCT/FR2012/050153
(87) Numéro de publication internationale: WO 2012/101376

(56) Documents cités:
- EP-A1- 0 335 481
- EP-A1- 0 976 487
- EP-A2- 2 149 675
- US-A1- 2007 065 283

## Description

La présente invention se rapporte à un procédé de perforation d'au moins une paroi d'une chambre de combustion.

Comme décrit dans la demande de brevet française numéro 2 668 246 (voir également la demande EP0976487), une telle chambre de combustion comporte habituellement deux parois de révolution coaxiales qui s'étendent l'une à l'intérieure de l'autre et sont reliées entre elles à l'une de leurs extrémités par une paroi annulaire de fond de chambre comportant des ouvertures d'alimentation en air et des moyens d'introduction de carburant.

La paroi interne et la paroi externe forment un canal annulaire de contournement dans lequel circule de l'air fourni par un compresseur haute-pression situé en amont de la chambre de combustion.

Classiquement, une fraction de cet air alimente la zone de combustion, axialement par les ouvertures d'alimentation en air ménagées en fond de chambre, et transversalement par des trous d'injection d'air primaire percés dans les parois interne et externe de la chambre.

De surcroît, en raison des températures élevées de la chambre de combustion, les parois interne et externe de cette dernière ont généralement besoin d'être refroidies. Pour ce faire, les chambres de combustion actuelles utilisent des procédés bien connus de refroidissement par multi-perforation. La multi-perforation consiste à pratiquer de multiples orifices d'injection d'air de refroidissement dans les parois de la chambre de combustion. L'air traversant ces orifices abaisse donc la température des parois puis de la chambre de combustion.

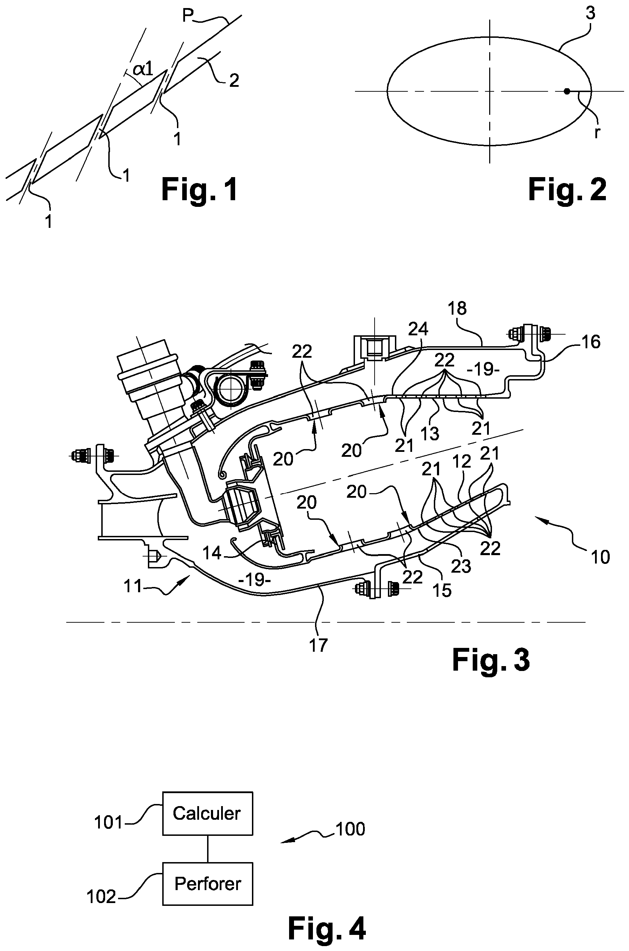

Ces orifices sont habituellement réalisés par perçage Laser. Pour refroidir une plus grande surface, des orifices 1 traversant la paroi 2 d'une chambre de combustion (représentés sur la figure 1) sont inclinés d'un angle α1 d'environ 30 degrés par rapport à un plan P tangent au profil de la paroi 2. Quel que soit le procédé de perçage, la section géométrique de l'outil (donc du Laser dans l'exemple représenté) est toujours de forme circulaire. La section 3 de l'extrémité externe (c'est-à-dire l'extrémité située au niveau de la surface externe de la paroi) de chaque orifice 1 (cf. figure 2) obtenue par la pénétration inclinée d'un outil de section circulaire dans le profil de la paroi 2 est donc de forme elliptique.

En outre, lors du fonctionnement de la turbomachine, les parois interne et externe de la chambre de combustion se dilatent thermiquement de façon hétérogène et sont soumises à des vibrations importantes, ce qui engendre des contraintes élevées au niveau des bords des orifices 1.

Comme indiqué précédemment, une chambre de combustion standard est perforée d'une multitude d'orifices de refroidissement disposés en quinconce, ces derniers étant orientés dans un même sens. Dans une réalisation, chaque extrémité externe d'un orifice présente une section elliptique dont le grand axe est sensiblement parallèle à l'axe de la chambre de combustion. Ainsi, dans une zone où les contraintes les plus importantes sont perpendiculaires à l'axe de la chambre de combustion (et donc au grand axe de l'ellipse), le petit rayon r de l'ellipse est le lieu de concentration des plus fortes contraintes mécaniques. Ces contraintes entraînent à terme l'apparition de fissures ou criques sur les bords de l'orifice 1, les fissures se propageant ensuite aux orifices 1 voisins dans la direction de l'axe de la chambre de combustion.

Cette particularité limite fortement la durée de vie des parois formant la chambre de combustion.

Un autre standard de chambre de combustion comporte des parois où certains des orifices présentent également une forme elliptique mais orientée dans un sens différent. A titre d'exemple, le grand rayon de la section de forme elliptique est perpendiculaire à l'axe de la chambre de combustion. Ainsi, si dans la zone où se situe un tel orifice les contraintes les plus importantes sont perpendiculaires à l'axe de la chambre de combustion et donc parallèles au grand axe de l'ellipse, les contraintes situées au niveau du petit rayon r de l'ellipse seront moins importantes. Une telle réalisation permet, au détriment de l'écoulement du flux d'air circulant dans la chambre de combustion, de retarder l'apparition de criques ou de fissures sur le bord de chacun des orifices.

L'inconvénient majeur de la réalisation précitée réside dans le fait que le flux d'air introduit dans la chambre de combustion par cette multitude d'orifices orientés dans des sens différents n'est pas homogène. Ces orientations différentes contrarient le sens axial de l'écoulement des flux et créées des perturbations aérodynamiques.

Dans ce contexte, l'invention vise à proposer un procédé de perforation d'une paroi permettant de limiter les contraintes engendrées sur les bords des orifices de la paroi. Lorsque la paroi est une paroi de chambre de combustion, l'invention permet en outre d'assurer un écoulement non perturbé du flux d'air introduit dans la chambre de combustion.

A cette fin, l'invention porte sur un procédé de perforation d'une paroi d'une chambre de combustion selon la revendication 1

Grâce à l'invention, chaque extrémité externe d'orifice située au niveau de la surface externe de la paroi présente une section adaptée aux directions des contraintes mécaniques qui lui seront exercées lors du fonctionnement de la chambre de combustion. Plus précisément, une telle extrémité externe d'orifice dont la section est adaptée aux directions des contraintes mécaniques qui lui seront appliquées lors du fonctionnement de la chambre de combustion permet de limiter les concentrations de contraintes et donc de retarder voire d'empêcher l'apparition de criques ou de fissures sur le bord de cet orifice.
Le procédé selon l'invention peut également présenter une ou plusieurs des caractéristiques selon les revendications dépendantes 2 à 6.

Ainsi, lorsque de l'air pénètre au cœur de la chambre de combustion via ces orifices, le flux d'air circulant dans la chambre de combustion n'est pas perturbé.

Dans une réalisation non limitative de l'invention, chaque axe de perforation forme avec le plan tangent un angle de l'ordre de 30 degrés.

Dans une réalisation non limitative de l'invention, l'orifice est réalisé par contournement. De façon non limitative, le contournement est réalisé au moyen d'une pluralité de perforations voisines ou d'un déplacement de l'outil selon une trajectoire déterminée.

Dans une réalisation non limitative de l'invention, ledit outil est un faisceau laser, un jet d'eau, un fil pour électroérosion ou tout autre type d'outil.
- L'invention a également pour objet une paroi perforée par une pluralité d'orifices présentant une orientation similaire, selon la revendication 7.

Les orifices présentent une orientation similaire de façon à obtenir un écoulement d'air non perturbé au sein de la chambre de combustion.

D'autres caractéristiques et avantages du procédé selon l'invention ressortiront clairement de la description qui en est donnée ci-après, à titre indicatif et nullement limitatif, en référence aux figures annexées ci-jointes, parmi lesquelles :
- la figure 1 représente une partie d'une paroi d'une chambre de combustion selon l'art antérieur ;
- la figure 2 illustre la section d'une extrémité externe d'un orifice traversant une paroi d'une chambre de combustion selon l'art antérieur ;
- la figure 3 illustre de façon schématique un exemple de réalisation d'une chambre de combustion conforme à l'invention ;
- la figure 4 représente un synoptique des étapes du procédé selon l'invention ;
- les figures 5A, 5B, 5C, 5D et 5E illustrent différents modes de réalisation d'orifices réalisés au moyen d'un procédé conforme à celui représenté sur la figure 4 ;
- la figure 6, 6A, 6B et 6C représentent de façon schématique trois types de chargement de contraintes que peut subir une paroi d'une chambre de combustion,
- la figure 7 illustre de façon schématique une coupe longitudinale d'une partie d'une paroi interne d'une chambre de combustion,
- la figure 8 illustre de façon schématique une coupe longitudinale d'une partie d'une paroi interne d'une chambre de combustion.

Les figures 1 et 2 ont été utilisées pour illustrer l'état de la technique.

Pour des raisons de clarté, seuls les éléments essentiels pour la compréhension de l'invention ont été représentés, et ceci sans respect de l'échelle et de manière schématique.

L'invention porte notamment sur une chambre de combustion 10 de turbomachine conforme à celle représentée sur la figure 3.

La chambre de combustion 10 est agencée en sortie d'un diffuseur 11, lui-même situé en sortie d'un compresseur non représenté, et comprend une première paroi 12 (formée par une paroi annulaire interne) et une deuxième paroi 13 (formée par une paroi annulaire externe) reliées en amont à une paroi annulaire 14 de fond de chambre. Ces première et deuxième parois 12 et 13 sont fixées en aval par des brides annulaires interne 15 et externe 16 respectivement sur un voile tronconique interne 17 du diffuseur 11 et sur une extrémité d'un carter externe 18 de la chambre de combustion 10.

Une partie du débit d'air fourni par le compresseur et sortant du diffuseur 11 alimente un canal annulaire 19. L'air qui passe dans ce canal annulaire 19 pénètre dans la chambre 10 par des orifices d'entrée d'air primaire 20 régulièrement répartis sur la circonférence de la paroi interne 12 et sur la circonférence de la paroi externe 13.

La paroi interne 12 et la paroi externe 13 comportent en outre de multiples orifices de refroidissement 21 pour le passage d'air de refroidissement permettant de refroidir la paroi interne 12 et la paroi externe 13.

Il convient de noter que chacun des orifices 20 et 21 présente une extrémité externe 22 dont la section de cette extrémité externe 22 est fonction de contraintes mécaniques calculées pour un fonctionnement de la chambre de combustion 10 dans la zone où est situé l'orifice. Les extrémités externes 22 des orifices 20 et 21 sont situées au niveau de la surface externe 23 de la paroi interne 12 et de la surface externe 24 de la paroi externe 13. Cette particularité avantageuse est détaillée ultérieurement.

La figure 4 représente les étapes du procédé 100 de perforation d'au moins une paroi d'une chambre de combustion selon l'invention. Le procédé 100 comporte une première étape de calcul 101 des contraintes mécaniques qui sont exercées sur une paroi d'une chambre de combustion pour un fonctionnement de la chambre de combustion. En effet, en fonctionnement la paroi est soumise à de très haute température générant de multiples contraintes mécaniques réparties de façon non uniforme sur la paroi, ces contraintes étant par exemple plus importantes en aval de la chambre de combustion. Pour mémoire et comme illustré sur la figure 3, les parois interne 12 et externe 13 de la chambre de combustion 10 sont maintenues à leur extrémité aval par des brides respectivement interne 15 et externe 16 qui sont relativement plus froides. Ainsi, une plus forte concentration de contraintes est généralement présente en aval des parois interne 12 et externe 13 du fait de la différence de température entre ces dernières et les brides auxquelles elles sont fixées.

En d'autres termes, cette première étape de calcul 101 permet de déterminer le champ de contraintes mécaniques que subit la paroi et notamment de déterminer la direction et l'intensité des contraintes mécaniques.

Il convient de noter que le calcul de contraintes mécaniques est réalisé de façon théorique, c'est-à-dire par modélisations numériques.

Le procédé 100 comporte en outre une deuxième étape de perforation 102 d'au moins un orifice selon un premier axe de perforation et dans une zone déterminée de la paroi (i.e. une zone où l'on a déterminé de façon théorique, au cours de la première étape de calcul 101, les contraintes mécaniques qui y sont exercées). Il convient de noter que cette perforation 102 est réalisée selon un axe de perforation spécifique. Cet axe de perforation spécifique est incliné par rapport à un plan tangent à la paroi de façon à faciliter l'acheminement de l'air en provenance de l'extérieur de la chambre de combustion vers l'intérieur de la chambre de combustion.

En outre, plus l'inclinaison est grande et plus la surface d'acheminement de l'air est grande, ce qui permet de refroidir une plus grande quantité de matière de la paroi.

Par ailleurs, en fonction des contraintes qui sont exercées dans cette zone déterminée, on choisit la section de l'outil que l'on va utiliser pour réaliser la perforation 102.

En effet, grâce à l'invention on peut obtenir une extrémité externe d'orifice (fonction de l'intersection de l'outil avec la paroi) souhaitée en modifiant uniquement la section de l'outil.

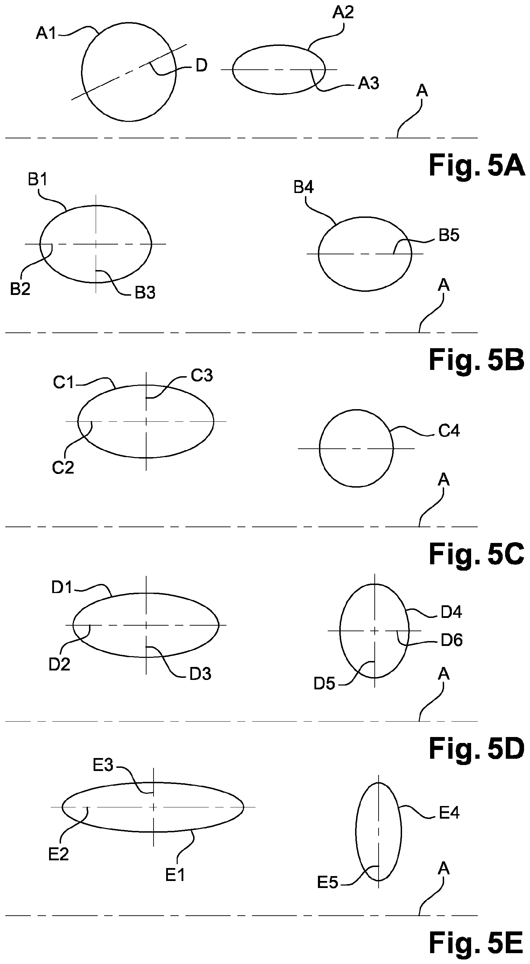

De façon non limitative, les figures 5A à 5E permettent d'illustrer différentes sections d'extrémité externe d'orifice que l'on peut réaliser avec la mise en œuvre d'un procédé 100 conforme à celui de l'invention. Plus particulièrement, les différentes sections d'extrémité externe d'orifice sont obtenues avec un outil, dont la section est variable, perforant toujours selon un axe de perforation spécifique formant, par exemple, un angle de 30 degrés avec un plan tangent au profil extérieur d'une paroi d'une chambre de combustion.

En d'autres termes, les différentes sections sont obtenues en modifiant uniquement la section de l'outil formé par exemple par un faisceau laser.

Ainsi, pour un outil présentant une section cylindrique A1 (de diamètre D 0,6 mm par exemple), la section de l'extrémité externe A2 de l'orifice correspondant est elliptique (cf. figure 5A). Le grand axe A3 de la section de l'extrémité externe A2 de l'orifice est parallèle à un axe déterminé A formé dans l'exemple par l'axe de chambre de combustion A. Ainsi, une telle géométrie d'ellipse est utilisée de façon avantageuse dans une zone où la direction des contraintes est parallèle à l'axe A de la chambre de combustion.

Comme illustré sur la figure 5B, pour un outil présentant une section elliptique B1 dont le grand axe B2 de 0,6 mm est parallèle à l'axe A de la chambre de combustion et le petit axe B3 de 0, 4 mm est perpendiculaire au grand axe B2, la section de l'extrémité externe B4 de l'orifice correspondant forme une ellipse dont le grand axe B5 est parallèle à l'axe A de la chambre de combustion. De façon comparative avec la section de l'extrémité externe A2 illustrée sur la figure 5A, le grand axe B5 de la section de l'extrémité externe B4 est plus petit que le grand axe A3 de la section de l'extrémité externe A2. Cette différence est uniquement due à la section de l'outil utilisé pour perforer la paroi. Ainsi, une telle géométrie d'ellipse est utilisée de façon avantageuse dans une zone présentant des contraintes dont la direction des contraintes principales est parallèle à l'axe A de la chambre de combustion et la direction des contraintes minimales est perpendiculaire à l'axe A de la chambre de combustion.

Dans une mise en œuvre différente illustrée sur la figure 5C, pour une section d'outil C1 présentant une forme elliptique de grand axe C2 de 0,8 mm parallèle à l'axe A de la chambre de combustion et de petit axe C3 de 0,4 mm, la section de l'extrémité externe C4 de l'orifice correspondant est circulaire.

Ainsi, une telle géométrie circulaire est utilisée de façon avantageuse dans une zone présentant des contraintes parallèles et des contraintes perpendiculaires à l'axe A de la chambre de combustion d'intensités sensiblement identiques.

Dans une mise en œuvre encore différente représentée à la figure 5D, pour une section d'outil D1 présentant une forme elliptique dont le grand axe D2 de 1 mm est parallèle à l'axe A de la chambre de combustion et le petit axe D3 est de 0,4 mm, la section de l'extrémité externe D4 de l'orifice correspondant forme une ellipse. Il convient de noter que cette section D4 elliptique est différente de celle obtenue avec un outil de forme circulaire représenté sur la figure 5A. En effet, dans la mise en œuvre représentée sur la figure 5D, on obtient certes une section D4 de forme elliptique mais cette ellipse présente un grand axe D5 perpendiculaire à l'axe A de la chambre de combustion et un petit axe D6 parallèle à l'axe A. L'ellipse est donc inversée. Ainsi, une telle géométrie d'ellipse est utilisée de façon avantageuse dans une zone ou la direction des contraintes principales est perpendiculaire à l'axe A de la chambre de combustion.

Dans une réalisation différente illustrée à la figure 5E, pour un outil présentant une section elliptique E1 de grand axe E2 de 1,2 mm parallèle à l'axe A de la chambre de combustion et de petit axe E3 de 0,3 mm, la section de l'extrémité externe E4 de l'orifice correspondant forme une ellipse orientée similairement à la section de l'extrémité externe D4 représentée sur la figure 5D. Toutefois, le grand axe E5 de la section elliptique E4 est plus important que celui illustré sur la figure 5D. Ainsi, une telle géométrie d'ellipse est utilisée de façon avantageuse dans une zone présentant des contraintes dont la direction est perpendiculaire à l'axe A de la chambre de combustion.

Ainsi, il apparaît clairement à la lumière de la description précitée que le fait de modifier la section de l'outil utilisé permet d'obtenir des extrémités externes d'orifice présentant des géométries et/ou des orientations différentes.

Il convient de noter que le grand axe de chaque section d'extrémité externe d'orifice formant une ellipse est sensiblement parallèle au sens de chargement, c'est-à-dire à la direction des contraintes principales.

Dans un exemple non limitatif, l'outil utilisé par le procédé de l'invention est un faisceau laser. Ainsi, lors de la perforation 102 de la paroi, on modifie la section du faisceau laser pour obtenir une section d'extrémité externe d'orifice fonction des contraintes mécaniques calculées dans la zone où se situe l'orifice.

Dans un autre exemple non limitatif, l'outil utilisé par le procédé de l'invention est un jet d'eau.

Par ailleurs, lorsqu'un orifice calculé présente une section de petite dimension, par exemple de diamètre 0,6 mm, celui-ci peut être perforé en une seule étape de perforation 102.

A contrario, lorsque l'orifice calculé présente une section de plus grande dimension, celui-ci est réalisé par contournement. Plus particulièrement, le contournement consiste à réaliser une pluralité de petits orifices, chaque orifice étant entouré par au moins deux orifices. L'ensemble des petits orifices délimitant le périmètre de l'orifice calculé et plus spécifiquement le périmètre de l'extrémité externe de l'orifice. En d'autres termes, le contournement consiste à réaliser un découpage de la section de l'extrémité externe d'orifice calculée par une pluralité de perforation 102.

Dans une réalisation différente, le contournement est simplement réalisé en déplaçant l'outil selon une trajectoire spécifique.

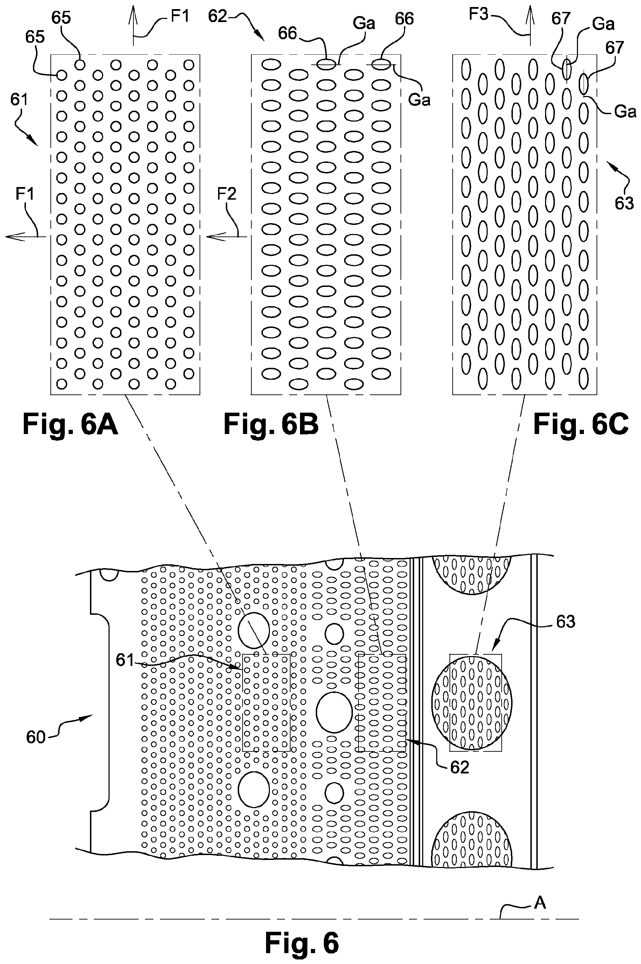

Les figures 6, 6A, 6B et 6C illustrent de façon schématique des contraintes mécaniques calculées sur une partie d'une paroi 60 d'une chambre de combustion conforme à celle de l'invention.

Dans une mise en œuvre non limitative de l'étape de calcul 101, on calcule 101 :
- pour une première zone 61 de la paroi 60, des contraintes mécaniques F1 perpendiculaires et des contraintes mécaniques F1 parallèles à l'axe A de la chambre de combustion, ces contraintes mécaniques F1 perpendiculaires et parallèles étant sensiblement similaires (Cf. figure 6A) ;
- pour une deuxième zone 62 de la paroi 60, des contraintes mécaniques F2 importantes parallèles à l'axe A de la chambre de combustion (Cf. figure 6B) ;
- pour une troisième zone 63 de la paroi 60, des contraintes mécaniques F3 importantes perpendiculaires à l'axe A de la chambre de combustion.

Grâce au procédé 100 de l'invention, pour éviter toute création de crique ou de fissure lors du fonctionnement ultérieur de la chambre de combustion, on perfore 102, en fonction des contraintes mécaniques calculées au cours de l'étape de calcul 101,
- dans la première zone 61 de la chambre de combustion, des orifices 65 présentant une extrémité externe de section circulaire ;
- dans la deuxième zone 62 de la chambre de combustion, des orifices 66 présentant une extrémité externe de section elliptique dont le grand axe Ga est parallèle à l'axe A de la chambre de combustion ;
- dans la troisième zone 63 de la chambre de combustion, des orifices 67 présentant une extrémité externe de section elliptique dont le grand axe Ga est perpendiculaire à l'axe A de la chambre de combustion.

En outre, il convient de noter que l'ensemble des orifices 65, 66 et 67 présentent une orientation similaire de façon à obtenir un écoulement d'air non perturbé au sein de la chambre de combustion.

Il convient de noter que dans d'autres réalisations, l'axe déterminé A peut être différent d'un axe de chambre de combustion et peut par exemple être formé par l'axe de rotation d'une aube.

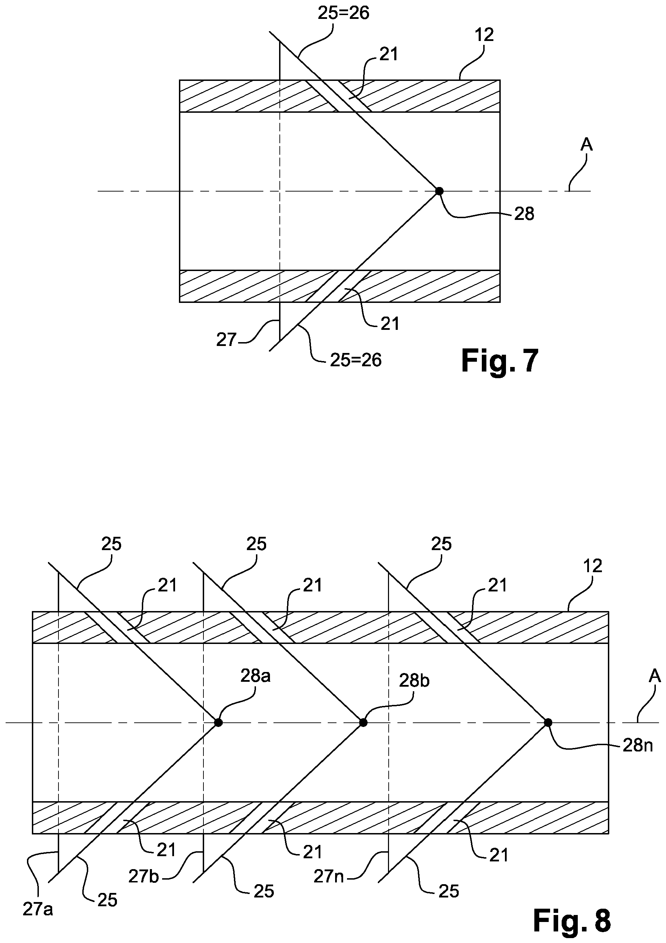

Plus particulièrement, la figure 7 illustre de façon schématique une coupe longitudinale d'une partie d'une paroi interne 12 d'une chambre de combustion 10 comportant un axe A de révolution. La paroi interne 12 est perforée par une pluralité d'orifices 21 (seulement deux sont visibles sur la figure 7). Les orifices 21 sont répartis à la circonférence de la paroi interne 12. Chaque orifice 21 présente un axe longitudinal 25 confondu avec un axe de perforation 26 spécifique. Chaque axe longitudinal 25 passe par une même ligne 27 circonférentielle à l'axe A de révolution de la chambre de combustion 10. On entend par ligne 27 circonférentielle, une ligne 27 formant un cercle circonférentiel à l'axe A et dont son centre est confondu avec l'axe A.

L'ensemble des axes de perforation 26 (également axes longitudinaux 25) sont en outre sécant en un même point 28.

Plus particulièrement, l'axe de perforation 26 correspond à l'axe longitudinal de l'outil au moyen duquel l'orifice 21 a été perforé.

Comme illustré à la figure 8, la paroi interne 12 est perforée par une pluralité d'orifices 21. Certains possèdent des axes longitudinaux 25 passant par une première ligne 27a circonférentielle à l'axe de révolution A de la chambre de combustion, l'ensemble de ces axes longitudinaux 25 étant sécant en un même premier point 28a.

D'autres orifices 21 possèdent des axes longitudinaux 25 passant par une deuxième ligne circonférentielle 27b à l'axe de révolution A de la chambre de combustion, la deuxième ligne 27b circonférentielle étant décalée axialement de la première ligne 27a circonférentielle. L'ensemble de ces axes longitudinaux 25 passant par la deuxième ligne 27b sont en outre sécant en un même deuxième point 28b.

D'autres orifices 21 possèdent des axes longitudinaux 25 passant par une n-ième ligne 27n circonférentielle à l'axe de révolution A de la chambre de combustion, la n-ième ligne 27n étant décalée axialement des première 27a et deuxième lignes 27b circonférentielles. L'ensemble de ces axes longitudinaux 25 passant par la n-ième ligne 27n étant sécant en un même n-ième point 28n.

Le procédé de perforation et la chambre de combustion selon l'invention trouvent une application particulièrement intéressante dans le domaine aéronautique.

## Revendications

1. Procédé (100) de perforation d'une paroi (12, 13) d'une chambre de combustion (10), ledit procédé (100) comportant :
- une étape de calcul (101) des contraintes mécaniques qui sont exercées sur ladite paroi (12, 13) pour un fonctionnement de la chambre de combustion (10) dans une première zone et une deuxième zone,
après l'étape de calcul,
- une étape de perforation (102) dans une première zone déterminée de ladite paroi (12, 13) d'au moins un orifice (65) présentant une extrémité externe de section circulaire, ladite perforation (102) étant réalisée au moyen d'un outil présentant une section fonction des contraintes mécaniques calculées dans ladite première zone déterminée où les contraintes mécaniques F1 sont perpendiculaires et parallèles à l'axe (A) de la chambre de combustion, les contraintes mécaniques F1 perpendiculaires et parallèles étant sensiblement similaire,
une réitération de l'étape de perforation (102) dans une deuxième zone déterminée de ladite paroi (12, 13) d'au moins un orifice (66) présentant une extrémité externe de section elliptique dont le grand axe Ga est parallèle à l'axe A de la chambre de combustion, ladite perforation (102) étant réalisée au moyen d'un outil présentant une section fonction des contraintes mécaniques calculées dans ladite deuxième zone déterminée où les contraintes mécaniques F2 sont parallèles à l'axe A de la chambre de combustion, pour une pluralité d'orifices (21) perforés, chaque orifice (21) est perforé selon un axe de perforation (26) spécifique passant par une même ligne (27) circonférentielle à l'axe (A) de la chambre de combustion (10), l'ensemble des axes de perforation (26) étant sécant en un même point.

2. Procédé (100) de perforation selon la revendication 1 **caractérisé en ce que** chaque axe de perforation (26) forme avec un plan tangent à ladite paroi (12, 13) un angle compris entre 20 et 70 degrés.

3. Procédé (100) de perforation selon l'une des revendications précédentes **caractérisé en ce que** l'orifice (21) est réalisé par contournement.

4. Procédé (100) de perforation selon l'une des revendications précédentes **caractérisé en ce que**, la section externe (22) de section elliptique est située au niveau de la surface externe (23, 24) de la paroi (12, 13).

5. Procédé (100) de perforation selon l'une des revendications 1 à 4 **caractérisé en ce que**, la section externe (22) de section circulaire est située au niveau de la surface externe (23, 24) de la paroi (12, 13).

6. Procédé (100) de perforation selon l'une des revendications précédentes **caractérisé en ce que** l'outil est :
- un faisceau laser, ou
- un jet d'eau.

7. Paroi (12, 13) de chambre de combustion perforée par une pluralité d'orifices (65, 66, 67) présentant une orientation similaire, ladite paroi (12, 13) étant **caractérisée en ce qu'**elle comporte des orifices (65, 66, 67) présentant une extrémité externe dont la section est fonction de contraintes mécaniques calculées dans la zone où est situé ledit orifice (65, 66, 67) de manière à limiter les concentrations de contraintes sur le bord dudit orifice (65, 66, 67), ladite paroi (12, 13) comprenant :
- des orifices (65) présentant une extrémité externe de section circulaire dans une première zone où les contraintes mécaniques principales (F1), calculées dans une première zone (61) où sont situés lesdits orifices (65), sont perpendiculaires et parallèles à un axe déterminé (A) de la chambre de combustion,
- des orifices (66) présentant une extrémité externe de section elliptique comportant un grand axe (Ga) sensiblement parallèle à l'axe déterminé (A) dans une deuxième zone où les contraintes mécaniques principales (F2), calculées dans une deuxième zone (62) où sont situés lesdits orifices (66), sont parallèles audit axe déterminé (A),
- des orifices (67) présentant une extrémité externe de section elliptique comportant un grand axe (Ga) sensiblement perpendiculaire audit axe déterminé (A) dans un troisième zone où les contraintes mécaniques principales (F3), calculées dans une troisième zone (Z3) où sont situés lesdits orifices (67), sont perpendiculaires audit axe déterminé (A).

## Patentansprüche

1. Perforierungsverfahren (100) einer Wand (12, 13) einer Verbrennungskammer (10), wobei das genannte Verfahren (100) umfasst:
- einen Berechnungsschritt (101) der mechanischen Spannungen, die auf die genannte Wand (12, 13) für einen Betrieb der Verbrennungskammer (10) in einem ersten Bereich und einem zweiten Bereich angewendet werden,
nach dem Berechnungsschritt
- einen Perforierungsschritt (102) in einem ersten bestimmten Bereich der genannten Wand (12, 13) wenigstens einer Öffnung (65), die ein äußerstes Ende mit kreisförmigem Querschnitt aufweist, wobei die genannte Perforierung (126) mittels eines Werkzeugs realisiert wird, das einen Querschnitt entsprechend den mechanischen Spannungen aufweist, die in dem der genannte bestimmte erste Bereich berechnet werden, wo die mechanischen Spannungen F1 zur Achse (A) der Verbrennungskammer lotrecht und parallel sind, wobei die lotrechten und parallelen mechanischen Spannungen F1 deutlich ähnlich sind,
eine Wiederholung des Perforierungsschritts (102) in einem bestimmten zweiten Bereich der genannten Wand (12, 13) wenigstens einer Öffnung (66), die ein äußerstes Ende mit elliptischem Querschnitt aufweist, deren große Achse Ga parallel zur Achse A der Verbrennungskammer ist, wobei die genannte Perforierung (102) mittels eines Werkzeugs realisiert wird, das einen Querschnitt entsprechend der mechanischen Spannungen aufweist, die in dem genannten bestimmten zweiten Bereich berechnet werden, wo die mechanischen Spannungen F2 parallel zur Achse A der Verbrennungskammer parallel sind, wobei bei einer Vielzahl von perforierten Öffnungen (21) jede Öffnung gemäß einer spezifischen Perforierungsachse (26) perforiert wird, die durch eine und dieselbe Umfangslinie (27) zur Achse (A) der Verbrennungskammer (10) hindurchtritt, wobei die Gruppe der Perforierungsachsen (26) in einem und demselben Punkt schneidend ist.

2. Perforierungsverfahren (100) gemäß Anspruch 1, **dadurch gekennzeichnet, dass** jede Perforierungsachse (26) mit einer zur genannten Wand (12, 13) anliegenden Ebene einen zwischen 20 und 70 Grad inbegriffenen Winkel bildet.

3. Perforierungsverfahren (100) gemäß einem der voranstehenden Ansprüche, **dadurch gekennzeichnet, dass** die Öffnung (21) per Umgehung realisiert wird.

4. Perforierungsverfahren (100) gemäß einem der voranstehenden Ansprüche, **dadurch gekennzeichnet, dass** der externe Abschnitt (22) mit elliptischem Querschnitt auf der externen Oberfläche (23, 24) der Wand (12, 13) angeordnet ist.

5. Perforierungsverfahren (100) gemäß einem der Ansprüche 1 bis 4, **dadurch gekennzeichnet, dass** der externe Abschnitt (22) mit kreisförmigem Querschnitt an der externen Oberfläche (23, 24) der Wand (12, 13) angeordnet ist.

6. Perforierungsverfahren (100) gemäß einem der voranstehenden Ansprüche, **dadurch gekennzeichnet, dass** das Werkzeug:
- ein Laserstrahl oder
- ein Wasserstrahl ist.

7. Verbrennungskammer-Wand (12, 13), die durch eine Vielzahl von Öffnungen (65, 66, 67) perforiert ist, die eine ähnliche Ausrichtung aufweisen, wobei die genannte Wand (12, 13) **dadurch gekennzeichnet ist, dass** sie Öffnungen (65, 66, 67) umfasst, die ein äußerstes Ende aufweisen, dessen Querschnitt mechanischen Spannungen entspricht, die in dem Bereich berechnet sind, in dem die genannte Öffnung (65, 66, 67) derart angeordnet ist, dass die Spannungskonzentrationen auf dem Rand der genannten Öffnung (65, 66, 67) begrenzt sind, wobei die genannte Wand (12, 13) umfasst:
- Öffnungen (65), die ein äußerstes Ende mit einem kreisförmigen Querschnitt in einem ersten Bereich aufweisen, wo die mechanischen Hauptspannungen (F1), die in einem ersten Bereich (61) berechnet sind, wo die genannten Öffnungen (65) angeordnet sind, zur bestimmten Achse (A) der Verbrennungskammer lotrecht und parallel sind,
- Öffnungen (66), die ein äußerstes Ende mit einem elliptischen Querschnitt aufweisen, der eine große Achse (Ga) umfasst, die deutlich parallel zur bestimmten Achse (A) in einem zweiten Bereich ist, wo die mechanischen Hauptspannungen (F2), die in einem zweiten Bereich (62) berechnet sind, wo die genannten Öffnungen (66) angeordnet sind, zur genannten bestimmten Achse (A) parallel sind,
- Öffnungen (67), die ein äußerstes Ende mit elliptischem Querschnitt aufweisen, der eine große Achse (Ga) umfasst, die deutlich parallel zur bestimmten Achse (A) in einem dritten Bereich ist, wo die mechanischen Hauptspannungen (F3), die in einem dritten Bereich (Z3) berechnet sind, wo die genannten Öffnungen (67) angeordnet sind, zur bestimmten Achse (A) lotrecht sind.

## Claims

1. Method (100) for perforating a wall (12, 13) of a combustion chamber (10), said method (100) comprising:
- a step (101) to calculate mechanical stresses applied on said wall (12, 13) for a use of said wall in a first zone and a second zone,
after the calculation step (101),
- a step (102) to perforate at least one orifice (65)having an outer end with a circular cross-section in a first determined zone of said wall (12, 13), said perforation (102) being made using a tool with a cross-section dependent on the mechanical stresses calculated in said first determined zone where the mechanical stresses F1 are perpendicular and parallel to the axis (A) of the combustion chamber, the perpendicular and parallel mechanical stresses F1 being noticeably similar,
a reiteration of the perforation step (102) in a second determined zone of said wall (12,13) of at least one orifice (66) having an outer end with an elliptical cross-section which major axis (Ga) is parallel to the axis (A) of the combustion chamber, said perforation step (102) being made using a tool with a cross-section dependent on the mechanical stresses calculated in said second determined zone where the mechanical stresses F2 are parallel to the axis (A) of the combustion chamber, for a plurality of perforated orifices (21) each orifice (21) being perforated along a specific perforation axis (26) passing through the same line (27) circumferential to the axis (A) of the combustion chamber (10), all of the perforation axes (26) intersecting at a single point.

2. Perforation method (100) according to claim 1, **characterised in that** each perforation axis (26) forms an angle of between 20 and 70 degrees with a plane tangent to said wall (12, 13).

3. Perforation method (100) according to one of the previous claims, **characterised in that** the orifice (21) is made by peripheral cutting.

4. Perforation method (100) according to one of the previous claims, **characterised in that** said outer section (22) with an elliptical section is located at the outer surface (23, 24) of the wall (12, 13) .

5. Perforation method (100) according to one of claims 1 to 4, **characterized in that** the outer section (22) with a circular section is located at the outer surface (23,24) of the wall (12,13).

6. Perforation method (100) according to any one of the previous claims, **characterised in that** the tool is:
- a laser beam, or
- a water jet.

7. Wall (12, 13) of a combustion chamber perforated by a plurality of orifices (65, 66, 67) with a similar orientation, said wall (12, 13), being **characterised in that** it comprises orifices (65,66,67) having an outer end, the cross-section of which being dependent on the mechanical stresses calculated in the zone where said orifice (65, 66,67) is located so as to limit the concentrations of mechanical stresses on the edge of said orifice (65,66,67), said wall (12,13) comprising:
- orifices (65) with an outer end with a circular cross-section in a first zone where the highest mechanical stresses (F1), calculated in a first zone (61) where said orifices (65) are located, are perpendicular and parallel to a determined axis (A) of the combustion chamber,
- orifices (66) with an outer end with an elliptical cross-section comprising a major axis (Ga) approximately parallel to the determined axis (A) in a second zone where the highest mechanical stresses (F2), calculated in a second zone (62) where the orifices (66) are located, are parallel to said determined axis (A),
- orifices (67) with an outer end with an elliptical cross-section comprising a major axis (Ga) approximately perpendicular to said determined axis (A) in a third zone where the highest mechanical stresses (F3) where the orifices (67) are located, are perpendicular to said determined axis (A) .
